# EUROPÄISCHE PATENTSCHRIFT

(11) **EP 0 892 160 B1**
(45) Veröffentlichungstag und Bekanntmachung des Hinweises auf die Patenterteilung: **11.09.2002**
(21) Anmeldenummer: 98112752.5
(22) Anmeldetag: 09.07.1998
(51) Int. Cl.: F01P 5/02, F01N 3/30, F01N 3/32

(54) **Verbrennungsmotoranlage mit Motorkühlung und Abgassekundärluftversorgung**
Internal combustion engine with engine cooling and secondary air supply system
Moteur à combustion interne avec refroidissement du moteur et dispositif secondaire d'alimentation en air

(30) Priorität: 18.07.1997 DE 19730905
(43) Veröffentlichungstag der Anmeldung: 20.01.1999
(73) Patentinhaber: DaimlerChrysler AG, 70567 Stuttgart (DE)
(72) Erfinder: Schenk, Jürgen, 73095 Albershausen (DE); Weist, Udo, 72141 Walddorfhäslach (DE); Welter, Lothar, 73760 Ostfildern (DE); Wolf, Hans-Christoph, Dr., 70597 Stuttgart (DE)

(56) Entgegenhaltungen:
- EP-A- 0 717 176
- DE-U- 9 011 256
- US-A- 5 095 691

## Beschreibung

Die Erfindung bezieht sich auf eine Verbrennungsmotoranlage mit Mitteln zur Motorkühlung und Mitteln zur Abgassekundärluftversorgung, insbesondere für Kraftfahrzeuge.

Eine derartige Verbrennungsmotoranlage ist aus der Patentschrift US 5.095.691 bekannt. Die dortige Anlage ist mit einem Motorlüfter und einem Abgassekundärluftgebläse ausgerüstet, die jeweils durch einen eigenen Hydraulikmotor angetrieben sind. Die Hydraulikmotoren weisen eine gemeinsame Öldruckversorgung auf, die einen ausschließlich alternierenden Betrieb der beiden Hydraulikmotoren gewährleistet.

Aus der US 3.393.668 ist eine Abgaskalysatoreinheit bekannt, bei der ein Sekundärluftgebläse und das Laderlaufrad des Katalysators von einem gemeinsamen Elektromotor angetrieben werden. Das Sekundärluftgebläse und der Elektromotor sind dabei als gemeinsame Baueinheit ausgeführt.

Aus der Offenlegungsschrift DE 1 476 110 ist eine Verbrennungsmotoreinheit für ein Kraftfahrzeug bekannt, bei der ein zentraler Elektromotor, der mit konstanter Drehzahl arbeitet, mehrere Hilfsaggregate, insbesondere Flüssigkeitspumpen sowie einen Motorlüfter, mechanisch antreibt.

Ferner ist in der US 4.491.094 ein Lüfter für einen Kraftfahrzeugantriebsmotor offenbart, der durch einen Elektromotor angetrieben wird, dessen Rotorwelle zudem einstückig oder über eine Kupplung mit der Welle einer Vakuumpumpe für eine Bremsanlage verbunden ist. Beim Betrieb des Elektromotors sind sowohl der Lüfter als auch die Vakuumpumpe in Betrieb, wobei die Wirkung der Vakuumpumpe auf die angeschlossene Pneumatik mit Hilfe eines pneumatischen Schaltelementes regelbar ist.

Aus der DE-U-90 11 256 ist schließlich eine gattungsgemäße Verbrennungsanlage, beispielsweise für einen Rasenmäher, mit einem Kühlgebläse bekannt. Das Kühlgebläse ist durch eine Abdeckhaube abgedeckt, wobei in die Abdeckhaube im Wirkbereich des Kühlgebläses ein Sammeltrichter ausgeformt ist. Der Sammeltrichter ist zur Sekundärluftversorgung über eine Sekundärluftleitung mit einer Abgasleitung stromauf eines darin angeordneten Katalysators verbunden.

Aufgabe der Erfindung ist es, eine Verbrennungsmotoranlage der eingangs genannten Art bereitzustellen, bei der die Versorgung mit Motorkühlluft und Abgassekundärluft mit besonders einfachen Mitteln realisiert ist.

Diese Aufgabe wird erfindungsgemäß durch eine Verbrennungsmotoranlage mit den Merkmalen des einzigen Patentanspruchs gelöst. Bei dieser Verbrennungsmotoranlage wird Umgebungsluft von einem zentralen Luftförderaggregat angesaugt und für Zwecke sowohl der Motorkühlung als auch der Versorgung eines Abgaskatalysators mit Sekundärluft mit Hilfe einer Umschaltvorrichtung alternierend zur Verfügung gestellt. Der Betrieb des Luftförderaggregats erfolgt dabei alternierend derart, daß entweder Luft zur Motorkühlung oder zur Abgassekundärluftversorgung gefördert wird. Die Auslegung des Luftförderaggregats insbesondere hinsichtlich Förderleistung und Fördercharakteristik ist dabei zweckmäßigerweise so gewählt, daß letztere an die jeweilige Betriebsart, Motorkühlgebläsefunktion einerseits und Abgassekundärluft-Verdichterfunktion andererseits, angepaßt sind.

Ein bevorzugtes Ausführungsbeispiel der Erfindung ist in der Zeichnung dargestellt und wird nachfolgend beschrieben.

Die einzige Figur zeigt ein Blockdiagramm der wichtigsten Komponenten eines erfindungsgemäßen Luftförderaggregates einer Kraftfahrzeug-Verbrennungsmotoranlage.

Die mit dem gezeigten Luftförderaggregat ausgerüstete Verbrennungsmotoranlage weist z.B. in herkömmlicher Weise einen Kühlwasserkreislauf zur Motorkühlung auf, der einen mit Motorkühlluft beaufschlagbaren Motorkühler umfaßt. Ferner weist sie einen Abgasstrang mit einem Abgaskatalysator, insbesondere einem 3-Wege-Katalysator, auf. Für den Katalysator ist eine hermömmliche Abgassekundärluftzuführung für Kaltstartphasen vorgesehen, in denen der Motor mit einem fetten Kraftstoff-/Luftgemisch betrieben wird bzw. im Motor eine unvollständige Verbrennung abläuft. In diesem Fall ergibt sich ein Sauerstoffmangel im Abgas, der eine gewünschte katalytische Oxidation bestimmter Abgasbestandteile behindert, was durch die zugeführte Abgassekundärluft ausgeglichen wird.

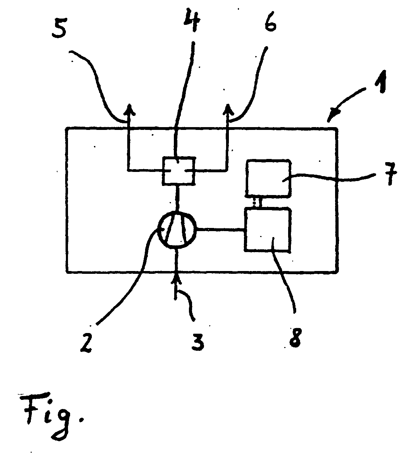

Der genannte Abgassekundärluftbedarf fällt somit im üblichen Kraftfahrzeugbetrieb mit einem Zustand zusammen, in dem die Funktion des Motorkühlers im Kühlwasserkreislauf nicht erforderlich ist. Dies nützt die Erfindung dahingehend aus, daß sie die beiden, herkömmlicherweise getrennt und unabhängig voneinander vorgesehenen Einheiten Motorlüfter und Abgassekundärluftpumpe zu einem einzigen Luftförderaggregat 1 zusammenfaßt, wie in Fig. 1 dargestellt. Das Luftförderaggregat 1 umfaßt einen Luftverdichter 2, der über einen Einlaß 3 Umgebungsluft ansaugt, diese bis zu einem gewissen einstellbaren Grad verdichtet und sie anschließend in eine Verteilerkammer 4 entläßt. Die Verteilerkammer 4 umfaßt ein nicht dargestelltes, herkömmliches Umschaltventil, über das die geförderte Luft entweder zu einem ersten Auslaß 5, der zum nicht dargestellten Motorkühler führt, oder zu einem zweiten Auslaß 6 zur Abgassekundärluftversorgung geleitet wird. Der Luftverdichter 2 wird von einem über eine Steuerung 7 ansteuerbaren Elektromotor 8 angetrieben. In einem modifizierten Ausführungsbeispiel kann der Luftverdichter 2 auch direkt über eine drehzahlregelbare Kupplung und/oder ein-Getriebe ar die Kurbelwelle des Verbrennungsmotors angekoppelt sein.

Im Kaltstartbetrieb der erfindungsgemäßen Verbrennungsmotcranlage wird nun das Schaltventil der Verteilerkammer 4 derart geschaltet, daß die vom Luftverdichter 2 geförderte Luft über den Auslaß 6 dem Abgasstrang zugeführt wird. Über die Steuerung 7 wird der Elektromotor 8 in seiner Leistung passend derart eingestellt, daß der von ihm angetriebene Luftverdichter 2 einen als Abgassekundärluft geeigneten Luftmassenstrom mit ausreichendem Druck fördert. Gleichzeitig wird für den bevorzugten Fall einer einstellbaren Fördercharakteristik des Luftverdichters 2 vorgesehen, diese geeignet anzupassen, d.h. in Richtung hohem Druck bei gemäßigter Luftmenge einzustellen.

Mit steigendem Sauerstoffanteil im Abgas kann die Abgassekundärluftzufuhr und damit die Leistung des Luftverdichters 2 bis hin zum Stillstand reduziert werden, solange noch keine Kühlung des Verbrennungsmotors erforderlich ist. Sobald dies dann der Fall ist, wird der Luftverdichter 2 über den Elektromotor 8 wieder mit höherer Leistung betrieben, wobei das Ventil der Verteilerkammer 4 so geschaltet wird, daß die vom Luftverdichter 2 geförderte Luft in den Auslaß 5 zum Motorkühler geleitet wird. In Abhängigkeit von der Kühlwassertemperatur des Verbrennungsmotors kann die Drehzahl des Elektromotors 8 und damit die Förderleistung des Luftverdichters 2 geregelt werden. Da zur Motorkühlung eine vergleichsweise hohe Kühlluftmenge bei relativ geringem Druck zweckmäßig ist, wird bei verstellbarer Fördercharakteristik des Luftverdichters 2 diese entsprechend eingestellt. Dies kann bei Bedarf zusätzlich von einer druckreduzierenden trichterförmigen Aufweitung des zum Motorkühler führenden Luftkanals unterstützt werden.

Durch die erfindungsgemäße Anordnung kann von den herkömmlichen Einheiten Motorkühlluftgeblase und Abgassekundärluftpumpe eine der beiden einschließlich der zugehörigen Steuerungseinheit entfallen. Dies ermöglicht eine hinsichtlich Bauraum und Gewicht optimierte Luftversorgung der Verbrennungsmotoranlage für diese beiden Zwecke, die sowohl montagetechnisch vorteilhaft als auch kostengünstig ist. Die vorgeschlagene Anordnung ist für beliebige Verbrennungsmotoren anwendbar und flexibel einsetzbar.

## Patentansprüche

1. Verbrennungsmotoranlage, insbesondere für ein Kraftfahrzeug mit
- Mitteln zur Motorkühlung,
- Mitteln zur Abgassekundärluftversorgung und
- einem gemeinsamen Luftförderaggregat (1) zur Bereitstellung der zur Motorkühlung einerseits und zur Abgassekundärluftversorgung andererseits benötigten Luft,
**dadurch gekennzeichnet, daß**
- eine Umschaltvorrichtung zur alternierenden Luftversorgung der Mittel zur Motorkühlung und der Mittel zur Abgassekundärluftversorgung durch das gemeinsame Luftförderaggregat (1) vorgesehen ist.

## Claims

1. Combustion engine unit, particularly for a vehicle, with
- means for cooling the engine
- exhaust secondary-air supply means, and
- a common air feed unit (1) for supplying and for cooling the engine on the one hand, and also for the air needed for supplying exhaust secondary air,
**characterized in that**
- a changeover mechanism, for alternating air supply from the engine-cooling means and the exhaust secondary-air supply means, via the common air feed unit (1), is provided.

## Revendications

1. Installation de moteur à combustion interne, en particulier pour un véhicule automobile, comprenant :
- des moyens pour le refroidissement du moteur,
- des moyens pour l'alimentation en air secondaire dans les gaz d'échappement, et
- un groupe de convoyage d'air commun (1) pour la mise à disposition de l'air nécessaire d'une part pour le refroidissement du moteur et d'autre part pour l'alimentation en air secondaire dans les gaz d'échappement,
**caractérisée en ce qu'**il est prévu un dispositif d'inversion pour l'alimentation d'air en alternance vers les moyens pour le refroidissement du moteur et vers les moyens pour l'alimentation en air secondaire dans les gaz d'échappement depuis le groupe de convoyage d'air commun (1).
